# EUROPEAN PATENT APPLICATION

(11) **EP 4 199 210 A1**
(43) Date of publication of application: **21.06.2023**
(21) Application number: 21214649.2
(22) Date of filing: 15.12.2021
(51) Int. Cl.: H01M 50/204, H01M 50/342, H01M 50/358, H01M 50/30, H01M 50/35

(54) **BATTERY SYSTEM WITH A COVER ELEMENT FORMING A VENTING CHANNEL**

(71) Applicant: Samsung SDI Co., Ltd., Yongin-si, Gyeonggi-do 17084 (KR)
(72) Inventor: Maresch, Dominik, 8071 Hausmannstaetten (AT); Altenburger, Florian, 8160 Weiz (AT); Retter, Rainer, 8181 Unterfladnitz (AT)
(74) Representative: Gulde & Partner

(57) **Abstract**

The present disclosure refers to a battery system (100), comprising a battery pack (10) including a battery housing (11) and a plurality of battery cells (12) accommodated within the battery housing (11), a housing exit (14) of the battery housing (11), wherein a venting gas stream exhausted by one or more of the battery cells (12) during a thermal runaway exits the battery housing (11) through the housing exit (14), a cover element (20) covering an outer side (13) of the battery housing (11) including the housing exit (14), the cover element (20) forming a venting channel (24) with the outer side (13) of the battery housing (11) such that the venting gas stream exiting the housing exit (14) is received and guided by the venting channel (24) along the outer side (13) of the battery housing (11) to a channel exit (30) of the venting channel (24).

## Description

### Field of the Disclosure

The present disclosure relates to a battery system allowing for a venting gas stream exhausted in case of a thermal runaway to be guided towards an exit and to cool down before leaving the battery system. The disclosure further relates to a vehicle comprising such a battery system.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator or a hydrogen fuel power cell. Furthermore, the vehicle may include a combination of an electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as a power supply for small electronic devices, such as cellular phones, notebook computers and camcorders, while high-capacity rechargeable batteries are used as a power supply for electric and hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy content, in particular for motor driving of a hybrid vehicle. That is, the battery module is formed by interconnecting the electrode terminals of the plurality of unit battery cells depending on a required amount of power and in order to realize a high-power rechargeable battery.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. In automotive applications, battery systems often consist of a plurality of battery modules connected in series for providing a desired voltage. Therein, the battery modules may comprise submodules with a plurality of stacked battery cells, each stack comprising cells connected in parallel that are connected in series *(XpYs)* or multiple cells connected in series that are connected in parallel *(XsYp).*

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

A battery system further includes a battery management system (BMS), which is any electronic system that manages the rechargeable battery, battery module and battery pack, such as by protecting the batteries from operating outside their safe operating area, monitoring their states, calculating secondary data, reporting that data, controlling its environment, authenticating it and/or balancing it. For example, the BMS may monitor the state of the battery as represented by voltage (such as total voltage of the battery pack or battery modules, voltages of individual cells), temperature (such as average temperature of the battery pack or battery modules, coolant intake temperature, coolant output temperature, or temperatures of individual cells), coolant flow (such as flow rate, cooling liquid pressure), and current. Additionally, a BMS may calculate values based on the above items, such as minimum and maximum cell voltage, state of charge (SOC) or depth of discharge (DOD) to indicate the charge level of the battery, state of health (SOH; a variously-defined measurement of the remaining capacity of the battery as % of the original capacity), state of power (SOP; the amount of power available for a defined time interval given the current power usage, temperature and other conditions), state of safety (SOS), maximum charge current as a charge current limit (CCL), maximum discharge current as a discharge current limit (DCL), and internal impedance of a cell (to determine open circuit voltage).

The BMS may be centralized such that a single controller is connected to the battery cells through a multitude of wires. The BMS may be also distributed, wherein a BMS board is installed at each cell, with just a single communication cable between the battery and a controller. Or the BMS may be of modular construction including a few controllers, each handling a certain number of cells, with communication between the controllers. Centralized BMSs are most economical, least expandable, and are plagued by a multitude of wires. Distributed BMSs are the most expensive, simplest to install, and offer the cleanest assembly. Modular BMSs offer a compromise of the features and problems of the other two topologies.

A BMS may protect the battery pack from operating outside its safe operating area. Operation outside the safe operating area may be indicated in case of over-current, over-voltage (during charging), over-temperature, under-temperature, over-pressure, and ground fault or leakage current detection. The BMS may prevent operation outside the battery's safe operating area by including an internal switch (such as a relay or solid-state device) which is opened if the battery is operated outside its safe operating area, requesting the devices to which the battery is connected to reduce or even terminate using the battery, and actively controlling the environment, such as through heaters, fans, air conditioning or liquid cooling.

To provide thermal control of the battery pack a thermal management system is required to safely use the at least one battery module by efficiently emitting, discharging and/or dissipating heat generated from its rechargeable batteries. If the heat emission/discharge/dissipation is not sufficiently performed, temperature deviations occur between respective battery cells, such that the at least one battery module cannot generate a desired amount of power. In addition, an increase of the internal temperature can lead to abnormal reactions occurring therein and thus charging and discharging performance of the rechargeable deteriorates and the life-span of the rechargeable battery is shortened. Thus, cell cooling for effectively emitting/discharging/dissipating heat from the cells is required.

Exothermic decomposition of cell components may lead to a so-called thermal runaway. In general, thermal runaway describes a process that is accelerated by increased temperature, in turn releasing energy that further increases temperature. Thermal runaway occurs in situations where an increase in temperature changes the conditions in a way that causes a further increase in temperature, often leading to a destructive result. In rechargeable battery systems, thermal runaway is associated with strongly exothermic reactions that are accelerated by temperature rise. These exothermic reactions include combustion of flammable gas compositions within the battery pack housing. For example, when a cell is heated above a critical temperature (typically above 150°C) it can transit into a thermal runaway. The initial heating may be caused by a local failure, such as a cell internal short circuit, heating from a defect electrical contact, short circuit to a neighboring cell. During the thermal runaway, a failed battery cell, i.e., a battery cell which has a local failure, may reach a temperature exceeding 700°C. Further, large quantities of hot gas are ejected from inside of the failed battery cell through the venting opening of the cell housing into the battery pack. The main components of the vented gas are H₂, CO₂, CO, electrolyte vapor and other hydrocarbons. The vented gas is therefore burnable and potentially toxic. The vented gas also causes a gas-pressure increase inside the battery pack.

A state of the art venting concept of a battery is to let the hot venting gas stream of a battery cell in thermal runaway escape through a system exit comprising a housing venting valve to the outside (the environment of the battery housing). Due to the high temperatures of the venting gas stream of up to 1,000° C the venting gas stream may pose a risk for any bystanders when exiting the system exit. In particular, there is a risk of deflagration of the venting gas at the system exit which may lead to damage of external components and to injuries of bystanders or service personnel.

It is thus an object of the present invention to overcome or reduce at least some of the drawbacks of the prior art and to provide an improved thermal runaway handling, in particular to provide a battery system safer for bystanders.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a battery system is provided comprising a battery pack including a battery housing and a plurality of battery cells accommodated within the battery housing, a housing exit of the battery housing, wherein a venting gas stream exhausted by one or more of the battery cells during a thermal runaway exits the battery housing through the housing exit, a cover element covering an outer side of the battery housing including the housing exit, the cover element forming a venting channel with the outer side of the battery housing such that the venting gas stream exiting the housing exit is received and guided by the venting channel along the outer side of the battery housing to a channel exit of the venting channel.

According to another aspect of the present disclosure, an electric vehicle comprising such a battery system is provided.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic perspective view of a battery system according to an embodiment.
- Fig. 2: illustrates a schematic exploded view of parts of the battery system according to an embodiment.
- Fig. 3: illustrates a schematic cross section of a lower part of the battery system according to another embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery system is provided comprising a battery pack including a battery housing which accommodates a plurality of battery cells. The battery cells may be interconnected via busbars contacting the respective electrode terminals of the battery cells to form one or more battery modules as explained above. The battery cells may e.g. be prismatic or cylindrical cells. The battery cells comprise venting exits at a venting side of the battery cells, the venting exits allowing a venting gas stream to escape the battery cells during a thermal runaway. Venting valves may be provided at the venting exits. The battery system further comprises a housing exit through which the venting gas stream may leave the battery housing. The housing exit may be part of the battery housing. A burst membrane may be arranged at the housing exit as will be explained later on.

The battery system further comprises a cover element which is arranged such that it covers an outer side of the battery housing and the housing exit. The outer side of the battery housing may in particular be an underside of the battery housing. The housing exit is arranged at the outer side of the battery housing. The cover element covers not only the housing exit but also at least part of the outer side of the battery housing. Via the cover element and the outer side of the battery housing a venting channel is formed which receives and guides the venting gas stream leaving the housing exit along the outer side of the battery housing to a channel exit of the venting channel. In particular, the cover element may comprise a space that forms the venting channel together with the outer side of the battery housing. In other words, the venting channel may be delimited by channel walls formed by the cover element and by the outer side of the battery housing. The cover element may be understood as a venting device.

Thus, the venting gas stream is directed along the outer side of the battery housing along a predefined path. The venting gas stream flowing along the venting channel may transfer heat to the walls of the venting channel, i.e. to the cover element and to the outer side of the battery housing. The venting gas stream can come in direct contact with the outer side of the battery housing, in particular without any side wall of the cover element in between shielding the outer side of the battery housing from the venting gas stream. This allows for a heat transfer from the venting gas stream not only to the cover element but also directly to the outer side of the battery housing and therefore to a sufficient cool down of the venting gas stream before the venting gas stream exits the venting channel through the channel exit. Downstream of the channel exit a system exit may be arranged for venting the venting gas stream to the environment. Also, the channel exit may form such a system exit.

Thus, with the inventive battery system the venting gas of the venting gas stream may be cooled down sufficiently before leaving the battery system through the channel or system exit so as not to pose a risk to any bystanders. In particular, the risk of deflagration may be reduced significantly. The outer side of the battery housing may be particularly suited for receiving heat from the venting gas stream. For example, the outer side of the battery housing may have a relatively high thermal conductivity, in particular a higher thermal conductivity than the cover element. Further, as the cover element does not provide a fully formed venting channel but forms the venting channel with the outer side of the battery housing, the cover element can be simply attached to the battery housing. This simplifies the installation and allows the cover element to be retrofitted to existing battery packs. Furthermore, with the cover element being simply attached to the outside of the battery housing the number of sealing interfaces may be reduced. A proper venting solution is provided with a reduced number of parts and thus a reduced complexity and reduced costs with respect to known designs. Also, the cover element is thus suited for or easily adaptable to different battery packs, e.g. provided in different sizes. The disclosed cover element can be tailored easily for many different battery pack designs in terms of build-in situations and energy contents (vent gas amount). This is possible by configuration of a defined number of parts for numerous possible venting designs.

According to an embodiment, the channel exit provided by the cover element is laterally offset with respect to the housing exit of the battery housing. In other words, the channel exit and the housing exit are not aligned with one another but offset from one another. As a result of the channel exit and the housing exit being laterally offset, the venting gas stream leaving the housing exit cannot reach the channel exit along a straight path but only along a curved path. In particular, the cover element and thus the venting channel may be adapted such that the venting gas stream after leaving the housing exit is redirected at least one time, preferably two or more times, before reaching the channel exit. This ensures that the venting gas stream flows along the venting channel at least a minimum distance so that it may transfer sufficient heat to the channel walls, i.e. to the cover element and the outer side of the battery housing. The venting gas stream is thus cooled down sufficiently before leaving the system exit.

According to an embodiment, the venting channel comprises a rampart member surrounding the channel exit at least in part such that the venting gas stream coming from the housing exit is guided around and/or above the rampart member before reaching the channel exit. The rampart member forms an elevation or obstacle in the venting channel that the venting gas stream has to overcome to reach the channel exit. The rampart member may shield the channel exit from the venting gas stream at least partly such that the venting gas stream may need to divert from a main flow direction. The rampart member may form a circular wall around the channel exit such that the venting gas stream flowing along the main flow direction hits against the rampart member and is diverted in an upwards direction above the rampart member and/or along a circle around the rampart member to overcome the rampart member to reach the channel exit. The circular wall may comprise an opening at a side pointing away from the housing exit from which the venting gas stream is coming such that the venting gas stream being diverted around the rampart member can pass the rampart member. The rampart member therefore prolongs the path the venting gas stream needs to take before reaching the channel exit. Also, by diverting the venting gas stream the rampart member may induce turbulence into the venting gas stream. Both these effects lead to a better heat transfer to the channel walls, i.e. to the cover element and to the outer side of the battery housing and thus to a further cooldown of the venting gas stream. Aside from such heat transfer of vent gas at elevated temperatures also glowing particles that are vented from the cells have more time cool down before they leave the battery system. This reduces the risk of these particles to ignite when leaving the system exit and coming into contact with fresh air outside of the battery system. Such an ignition would otherwise propagate back into the battery pack leading to damage of the cells or other elements.

According to an embodiment, the battery system comprises a cooling plate arranged at the outer side of the battery housing, the cooling plate facing the cover element. The outer side of the battery housing may be formed at least in part by the cooling plate, in particular a cooling plate which is actively cooled via a cooling liquid. Thus, the cooling plate may be covered by the cover element at least in part and may serve as part of the channel wall of the venting channel. The venting gas stream is thus directed along the cooling plate in direct contact with the cooling plate which results in an even better heat transfer and cooldown of the venting gas stream. The cooling plate may serve as a cooling plate for the battery cells as well. The cooling plate may thus serve a double function of cooling not only the battery cells arranged at a first side of the cooling plate but also the venting gas stream flowing along a second side of the cooling plate opposite the first side.

According to an embodiment, the battery system comprises a burst membrane covering the housing exit of the battery housing, wherein the burst membrane is adapted to burst upon an inside pressure in the battery housing reaching a burst pressure during a thermal runaway. The burst membrane may seal the battery housing to the outside so that no foreign bodies or contaminations can enter through the housing exit into the battery housing. The burst membrane may in particular be adapted to prevent water from entering the housing exit. The burst membrane is, however, pressure sensitive such that a sudden pressure rise inside the battery housing, as it may occur during thermal runaway of one or more of the battery cells, leads to the burst pressure being reached or exceeded and the burst membrane bursting open so that the venting gas stream may exit the housing exit towards the venting channel.

According to an embodiment, the burst membrane is sealed directly to the battery housing. In other words, the burst membrane is attached directly to the battery housing, in particular the outside of the battery housing, covering the housing exit. The burst membrane itself may seal the housing exit sufficiently against the above-mentioned foreign bodies or contaminations, in particular if the burst membrane is self-adhesive. Thus, according to a respective embodiment the burst membrane is self-adhesive. Also, a separate sealing member may be provided, e.g. a sealing ring, the sealing ring surrounding the housing exit, wherein the burst membrane covers the sealing ring and the housing exit. Attaching the burst membrane, in particular a self-adhesive burst membrane, directly to the battery housing allows for a simple installation of the burst membrane. Also, such a burst membrane is suitable for or may be adapted to, for example cut to respective sizes, many different battery packs and/or housing exit sizes.

According to an embodiment, the burst membrane is gas-permeable such that gas may transmit the burst membrane as long as the pressure is below the burst pressure. Thus, slow pressure changes and/or small pressure difference between the inside of the battery housing and the outside of the battery housing may be equalized by a gas transfer through the intact burst membrane. For example, in known battery systems an overpressure inside the battery housing may occur due to ageing of the battery cells. Build-up of such an overpressure may be prevented by the gas-permeable burst membrane.

According to an embodiment, the burst membrane is adapted to bulge outwards upon the inside pressure in the battery housing reaching the burst pressure and wherein the cover element comprises a burst pin arranged to pierce the burst membrane when bulged outwards. Thus, the burst membrane may burst due to contact with the burst pin. When a thermal runaway occurs inside the battery housing the burst membrane is bulged outwards so much that it comes into contact with the burst pin, the burst pin piercing the burst membrane and thus causing the burst membrane to burst. The burst pin may form part of the cover element, in particular the burst pin may be formed as one-piece with the cover element, e.g. via injection molding, which allows for a simple construction, in particular when providing an existing battery housing with the cover element and the burst membrane.

According to an embodiment, the cover element is sealed directly to the outer side of the battery housing. In other words, the cover element is attached directly to the outer side of the battery housing. A separate sealing member may be provided, e.g. a sealing ring, the sealing member sealing the cover element against the battery housing such that a gas-tight venting channel is formed. This further simplifies the installation of the cover element. Also, such an installation of the cover element allows the cover element to be used for or to be adapted to many different battery packs and/or housing exit sizes. The cover element can thus also easily be retrofitted to existing battery packs.

According to an embodiment, the battery system comprises a sealing member surrounding the channel exit at an outer side of the channel exit to seal the channel exit against an underbody of a vehicle. In other words, the sealing member may be provided at an outer side wall member of the cover element, the side wall member forming the channel exit. This way a safe and gas-tight connection with the vehicle may be achieved so that the venting gas stream may be safely guided to the outside.

The invention further pertains to a cover element which is adapted to be attached to an outer side of a battery housing, the cover element being further adapted to form a venting channel with the outer side of the battery housing for receiving and guiding a venting gas stream exiting a housing exit of the battery housing along the outer side of the battery housing towards a channel exit of the cover element. The cover element may further comprise a sealing member to be sealed towards the outer side of the battery housing, a rampart member to divert the venting gas stream and/or a burst pin to burst, in case of a thermal runaway, a burst membrane covering the housing exit. Further details of the cover element can be derived from the above description of the battery system.

The invention further pertains to an electric vehicle comprising the battery system as explained above.

### Specific Embodiments

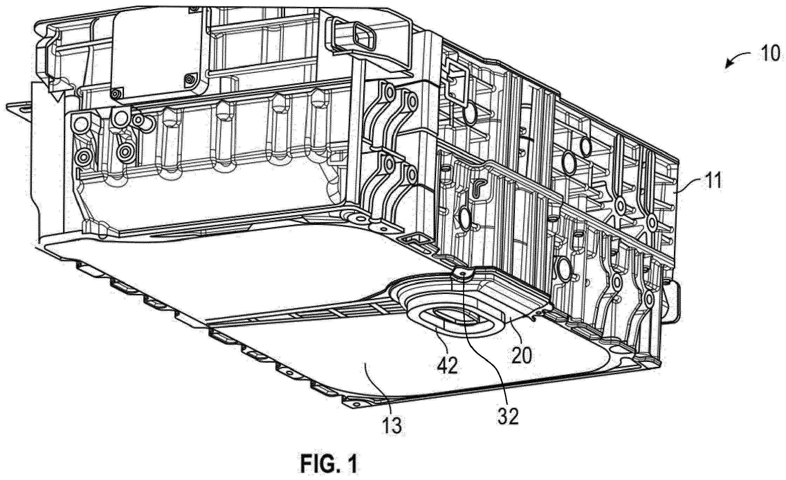

The figures illustrate a battery system according to an embodiment of the invention, the battery system comprising a battery pack 10 including a battery housing 11 and a plurality of battery cells 12 accommodated within the battery housing 11. The battery pack 10 may serve as a traction battery for an electric vehicle. Fig. 1 shows the battery system in a perspective view from below where it can be seen that the battery system comprises a cover element 20 attached to the outer side 13, here the underside, of the battery housing 11.

A housing exit 14 of the battery housing 11 is arranged at an end of a guide channel 15 through which a venting gas stream exhausted by one or more of the battery cells 12 during a thermal runaway is guided to exit the battery housing 11 through the housing exit 14 at the outer side 13. At the housing exit 14 a burst membrane 16 is arranged which is sealed directly to the underside of the battery housing 11 via a sealing member 18. The burst membrane 16 prevents contaminations as e.g. water from entering the housing exit 14.

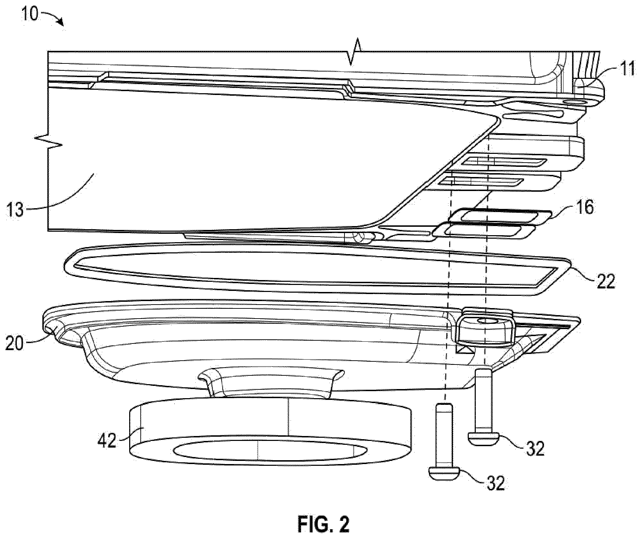

The cover element 20 covers the housing exit 14 of the battery housing 11 (see Fig. 2) and in part the outer side 13 of the battery housing. The cover element 20 is sealed directly to the outer side 13 via a sealing member 22, as can be seen in Fig. 2. The cover element 20 comprises a space 23 forming a venting channel 24 with the outer side 13 of the battery housing 11. In other words, the venting channel 24 is delimited not only the cover element 20 but also, at an upper end thereof, by the outer side 13 of the battery housing 11. The cover element 20 may be fixed to the battery housing 11 via screws 32.

The cover element 20 further comprises a burst pin 26 arranged such that it pierces the burst membrane 16 when the burst membrane 16 is bulged outwards due to an inside pressure in the battery housing 11, i.e. the guide channel 15, reaching a burst pressure. Thus, when the inside pressure raises due to a thermal runaway the burst membrane 16 bursts allowing the venting gas stream to exit the battery housing 11 at the venting exit 14.

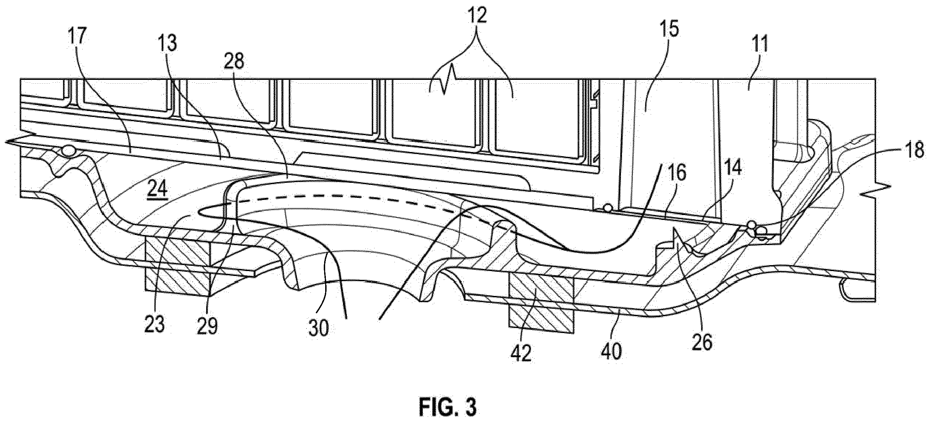

The venting gas stream V exiting the housing exit 14 is received and guided by the venting channel 24 along the outer side 13 of the battery housing 11 to a channel exit 30 of the venting channel 24, the channel exit 30 being laterally offset with respect to the housing exit 14, as shown in Fig. 3. The venting gas stream may thus transfer heat energy to the channel walls, i.e. to the cover element 20 and to the battery housing 11 thereby cooling down. The outer side 13 of the battery housing 11 may be provided by a cooling plate 17 for cooling the battery cells 12. Such a cooling plate 17 is particular suited as a heat sink, in particular if it is actively cooled.

The cover element 20 further comprises a rampart member 28 in the form of a circular wall with an opening 29 arranged at a side of the rampart member 28 opposite the side facing the housing exit 14. The rampart member 28 surrounds the channel exit 30 providing an obstacle for the venting gas stream V such that the venting gas stream V is diverted around the rampart member 28 through the opening 29 and above the rampart member 28 to reach the channel exit 30 as indicated in Fig. 3. This leads to a longer venting path and to turbulence in the venting gas stream and therefore to a better heat transfer to the channel walls.

The cover element 20 is further sealed to an underbody 40 of a vehicle via a sealing member 42 surrounding the channel exit 30 at an outer side of the channel exit 30. This way a safe and gas-tight connection with the vehicle may be achieved so that the venting gas stream may be safely guided to the outside.

Thus, with the inventive battery system the venting gas of the venting gas stream may be cooled down sufficiently before leaving the battery system through the channel or system exit so as not to pose a risk to any bystanders. In particular, the risk of deflagration may be reduced significantly.

Further, as the cover element 20 does not provide a fully formed venting channel but forms the venting channel with the outer side of the battery housing 11, the cover element 20 can be simply attached to the battery housing 11. This simplifies the installation and allows the cover element 20 to be retrofitted to existing battery packs 10. Furthermore, with the cover element 20 being simply attached to the outside of the battery housing the number of sealing interfaces may be reduced. A proper venting solution is provided with a reduced number of parts and thus a reduced complexity and reduced costs with respect to known designs. Also, the cover element 20 is thus suited for or easily adaptable to different battery packs, e.g. provided in different sizes. The disclosed cover element 20 can be tailored easily for many different battery pack designs in terms of build-in situations and energy contents (vent gas amount). This is possible by configuration of a defined number of parts for numerous possible venting designs.

### Reference signs

- 10: battery pack
- 11: battery housing
- 12: battery cells
- 13: outer side of battery housing
- 14: housing exit
- 15: guide channel
- 16: burst membrane
- 17: cooling plate
- 18: sealing member
- 20: cover element
- 22: sealing member
- 23: space
- 24: venting channel
- 26: burst pin
- 28: rampart member
- 30: channel exit
- 32: screws
- 40: underbody of vehicle
- 42: sealing member

## Claims

1. A battery system (100), comprising:
a battery pack (10) including a battery housing (11) and a plurality of battery cells (12) accommodated within the battery housing (11);
a housing exit (14) of the battery housing (11), wherein a venting gas stream exhausted by one or more of the battery cells (12) during a thermal runaway exits the battery housing (11) through the housing exit (14);
a cover element (20) covering an outer side (13) of the battery housing (11) including the housing exit (14), the cover element (20) forming a venting channel (24) with the outer side (13) of the battery housing (11) such that the venting gas stream exiting the housing exit (14) is received and guided by the venting channel (24) along the outer side (13) of the battery housing (11) to a channel exit (30) of the venting channel (24).

2. The battery system according to claim 1, wherein the channel exit (30) provided by the cover element (20) is laterally offset with respect to the housing exit (14) of the battery housing (11).

3. The battery system according to claim 1 or 2, wherein the venting channel (24) comprises a rampart member (28) surrounding the channel exit (30) at least in part such that the venting gas stream coming from the housing exit (14) is guided around and/or above the rampart member (28) before reaching the channel exit (30).

4. The battery system according to any one of the preceding claims, wherein the battery system comprises a cooling plate (17) forming the outer side (13) of the battery housing (11), the cooling plate (17) facing the cover element (20).

5. The battery system according to any one of the preceding claims, wherein the battery system comprises a burst membrane (16) covering the housing exit (14) of the battery housing (11), wherein the burst membrane (16) is adapted to burst upon an inside pressure in the battery housing (11) reaching a burst pressure during a thermal runaway.

6. The battery system according to claim 5, wherein the burst membrane (16) is sealed directly to the battery housing (11).

7. The battery system according to claim 5 or 6, wherein the burst membrane (16) is gas-permeable such that gas may transmit the burst membrane (16) as long as the pressure is below the burst pressure.

8. The battery system according to any one of claims 5 to 7, wherein the burst membrane (16) is self-adhesive.

9. The battery system according to any one of claims 5 to 8, wherein the burst membrane (16) is adapted to bulge outwards upon the inside pressure in the battery housing (11) reaching the burst pressure and wherein the cover element (20) comprises a burst pin (26) arranged to pierce the burst membrane (16) when bulged outwards.

10. The battery system according to any one of the preceding claims, wherein the cover element (20) is sealed directly to the outer side (13) of the battery housing (11).

11. The battery system according to any one of the preceding claims, wherein the battery system comprises a sealing member (42) surrounding the channel exit (30) at an outer side of thereof to seal the channel exit (30) against an underbody (40) of a vehicle.

12. An electric vehicle comprising the battery system according to any one of the preceding claims.

13. A cover element (20) which is adapted to be attached to an outer side (13) of a battery housing (11), the cover element (20) being further adapted to form a venting channel (24) with the outer side (13) of the battery housing (11) for receiving and guiding a venting gas stream exiting a housing exit (14) of the battery housing (11) along the outer side of the battery housing (11) towards a channel exit (30) of the cover element (20).

## Amended claims

### Amended claims in accordance with Rule 137(2) EPC.

1. A battery system (100), comprising:
a battery pack (10) including a battery housing (11) and a plurality of battery cells (12) accommodated within the battery housing (11);
a housing exit (14) of the battery housing (11), wherein a venting gas stream exhausted by one or more of the battery cells (12) during a thermal runaway exits the battery housing (11) through the housing exit (14);
a cover element (20) covering an outer side (13) of the battery housing (11) including the housing exit (14), the cover element (20) forming a venting channel (24) with the outer side (13) of the battery housing (11) such that the venting gas stream exiting the housing exit (14) is received and guided by the venting channel (24) along the outer side (13) of the battery housing (11) to a channel exit (30) of the venting channel (24),
wherein the venting channel (24) comprises a rampart member (28) surrounding the channel exit (30) at least in part such that the venting gas stream coming from the housing exit (14) is guided around and/or above the rampart member (28) before reaching the channel exit (30).

2. The battery system according to claim 1, wherein the channel exit (30) provided by the cover element (20) is laterally offset with respect to the housing exit (14) of the battery housing (11).

3. The battery system according to any one of the preceding claims, wherein the battery system comprises a cooling plate (17) forming the outer side (13) of the battery housing (11), the cooling plate (17) facing the cover element (20).

4. The battery system according to any one of the preceding claims, wherein the battery system comprises a burst membrane (16) covering the housing exit (14) of the battery housing (11), wherein the burst membrane (16) is adapted to burst upon an inside pressure in the battery housing (11) reaching a burst pressure during a thermal runaway.

5. The battery system according to claim 4, wherein the burst membrane (16) is sealed directly to the battery housing (11).

6. The battery system according to claim 4 or 5, wherein the burst membrane (16) is gas-permeable such that gas may transmit the burst membrane (16) as long as the pressure is below the burst pressure.

7. The battery system according to any one of claims 4 to 6, wherein the burst membrane (16) is self-adhesive.

8. The battery system according to any one of claims 4 to 7, wherein the burst membrane (16) is adapted to bulge outwards upon the inside pressure in the battery housing (11) reaching the burst pressure and wherein the cover element (20) comprises a burst pin (26) arranged to pierce the burst membrane (16) when bulged outwards.

9. The battery system according to any one of the preceding claims, wherein the cover element (20) is sealed directly to the outer side (13) of the battery housing (11).

10. The battery system according to any one of the preceding claims, wherein the battery system comprises a sealing member (42) surrounding the channel exit (30) at an outer side of thereof to seal the channel exit (30) against an underbody (40) of a vehicle.

11. An electric vehicle comprising the battery system according to any one of the preceding claims.

12. A cover element (20) which is adapted to be attached to an outer side (13) of a battery housing (11), the cover element (20) being further adapted to form a venting channel (24) with the outer side (13) of the battery housing (11) for receiving and guiding a venting gas stream exiting a housing exit (14) of the battery housing (11) along the outer side of the battery housing (11) towards a channel exit (30) of the cover element (20).
